# EUROPÄISCHE PATENTSCHRIFT

(11) **EP 3 036 443 B1**
(45) Veröffentlichungstag und Bekanntmachung des Hinweises auf die Patenterteilung: **10.06.2020**
(21) Anmeldenummer: 14771765.6
(22) Anmeldetag: 22.07.2014
(51) Int. Cl.: F16B 5/02

(54) **VERFAHREN ZUM VERBINDEN VON BAUTEILEN SOWIE BAUGRUPPE**
METHOD FOR JOINING COMPONENTS, AND AN ASSEMBLY
PROCÉDÉ POUR ASSEMBLER DES PIÈCES ET MODULE CORRESPONDANT

(30) Priorität: 21.08.2013 DE 102013109036
(43) Veröffentlichungstag der Anmeldung: 29.06.2016
(60) Teilanmeldung: 19172694.2
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/DE2014/100267
(87) Internationale Veröffentlichungsnummer: WO 2015/024556

(56) Entgegenhaltungen:
- EP-A2- 1 245 835
- DE-C1- 3 620 005
- DE-U1- 20 119 112
- DE-U1- 20 313 241
- DE-U1-202007 008 643
- GB-A- 2 316 457
- US-A1- 2010 303 582
- US-B1- 6 932 044

## Beschreibung

Die Erfindung bezieht sich auf ein Verfahren gemäß Oberbegriff Patentanspruch 1 sowie auf eine Baugruppe gemäß Oberbegriff Patentanspruch 5 und eine vormontierte Anordnung gemäß Patentanspruch 9.

Speziell auch im Fahrzeugbau ist es vielfach erforderlich, wenigstens zwei aus Flachmaterial, d.h. aus Stahlblech hergestellte Bauteile, z.B. Karosserieteile, in einem vorgegebenen Abstand voneinander miteinander zu verbinden bzw. zu verspannen.

Beispielsweise beschreibt die DE 36 20 005 C1 eine Vorrichtung zum Einstellen eines ersten Bauteils relativ zu einem zweiten Bauteil, die im Wesentlichen eine längenveränderliche Distanzbuchse zwischen den Bauteilen und eine Befestigungsschraube umfasst. Die Distanzbuchse ist aus einer Nietmutter und einer Stellschraube zusammengesetzt, wobei die Nietmutter topfförmig ausgebildet und in das erste Bauteil genietet ist. Eine zylindrische Topfwand der Nietmutter trägt ein Innengewinde, in das die Stellschraube mit einem Außengewinde eingreift. Die Stellschraube kann dabei so lange verdreht werden, bis die Bauteile den gewünschten Abstand zueinander aufweisen.

Ferner ist aus der DE 203 13 241 U1 eine Vorrichtung zum Verbinden von Bauteilen mit Blindnietbefestigung bekannt, bei der eine Blindnietmutter und ein Abstandhalter vorgesehen sind, wobei der Abstandhalter ein Außengewinde aufweist, welches mit einem Linksgewinde der Blindnietmutter in Eingriff steht. Eine vorgesehene Verbindungsschraube, die über einen Federring in reibschlüssiger Verbindung mit dem Abstandhalter steht, wird über ein vorgesehenes Rechtsgewinde in die Blindnietmutter eingeschraubt, wobei der Abstandshalter aufgrund der reibschlüssigen Verbindung mitgedreht und bis zum Anschlag am zweiten Bauteil aus der Blindnietmutter herausgeschraubt wird.

Ebenso ist der US 2010/0303582 A1 eine Montagevorrichtung für Motorhauben zu entnehmen, die eine Nietmutter, einen Abstandshalter und einen Spannbolzen aufweist. Die Nietmutter verfügt über zwei Innengewinde-Abschnitte unterschiedlichen Durchmessers, wobei der erste Innengewindeabschnitt für eine Wirkverbindung mit dem Abstandshalter und der zweite Innengewindeabschnitt für eine Wirkverbindung mit dem Spannbolzen ausgebildet ist.

Auch ist aus der GB 2 316 457 A ein Verfahren zum Verbinden von flachen Bauteilen in einem vorgegebenen Abstand zueinander bekannt, bei dem zunächst eine Spannmutter und ein Abstandshalter an gegenüberliegenden Seiten eines ersten Bauteils befestigt werden und anschließend das zweite Bauteil in dem vorgegebenen Abstand zum ersten Bauteil verspannt wird. Ferner beschreibt die US 6 923 044 B1 eine weitere Anordnung, bei der eine Nietmutter und eine Distanzscheibe an gegenüberliegenden Seiten eines flachen Bauteils mittels einer Nietverbindung frei rotierbar befestigt sind.

Bekannt für eine derartige Verbindung zweier aus Flachmaterial hergestellter Bauteile ist auch eine Spann- und Befestigungsvorrichtung, die aus einer an der Außenseite eines ersten Bauteils anliegenden Spannmutter, aus einem an der Außenseite eines zweiten Bauteils anliegenden und in die Spannmutter eingreifenden Spannbolzens und aus einem axial einstellbaren Abstandhalter bestehen, der von einer sich an der Innenfläche des ersten Bauteils abstützenden Gewindehülse und von einer Trommelmutter gebildet ist, die mit einem Außengewinde in das Innengewinde der Gewindehülse eingreift und gegen die Innenfläche des zweiten Bauteils anliegt. Die Trommelmutter und die Gewindehülse weisen ein Linksgewinde auf. Die Trommelmutter ist über eine Mitnehmerhülse mit dem Spannbolzen zur Übertragung eines begrenzten Drehmomentes verbunden, sodass beim Drehen des Spannbolzens durch Mitdrehen der Trommelmutter zunächst der Abstand zwischen den Bauteilen eingestellt und dann bei Erreichen eines geforderten Abstandes eine weitere Abstandsvergrößerung zwischen diesen Bauteilen und ein Mitdrehen der Trommelmutter mit dem Spannbolzen verhindert sind und über den in die Spannmutter zunehmend eingreifenden Spannbolzen das Verspannen der Bauteile erfolgt. Nachteilig bei der bekannten Spann- und Befestigungsvorrichtung ist allerdings, dass durch hakenartige in das erste Bauteil eingreifende Abschnitte die Gewindehülse am ersten Bauteil fixiert werden muss und außerdem die Spannmutter als Einzelteil auf den die Öffnungen in den Bauteilen sowie im Abstandhalter durchgreifenden Spannbolzen aufgesetzt und beim Spannen mit einem geeigneten Werkzeug gegen Mitdrehen mit dem Spannbolzen gesichert werden muss.

Aufgabe der Erfindung ist es, ein Verfahren aufzuzeigen, welches unter Vermeidung der Nachteile bekannter Spann- und/oder Befestigungsvorrichtungen ein Befestigen und/oder Verspannen von Bauteilen ermöglicht. Zur Lösung dieser Aufgabe ist ein Verfahren entsprechend dem Patentanspruch 1 ausgebildet. Eine Baugruppe ist Gegenstand des Patentanspruchs 5. Eine vormontierte Anordnung ist Gegenstand des Patentanspruchs 9.

Bei einer generellen Ausführungsform der Erfindung dient das Verfahren zum Verspannen von zwei Bauteilen, die nach dem Verspannen einen vorgegebenen Abstand voneinander aufweisen. Bei diesem Verfahren werden die Spannmutter sowie die Gewindehülse des den Abstand zwischen den Bauteilen bestimmenden Abstandhalters an dem ersten Bauteil fixiert bzw. vormontiert, und zwar vor dem Montieren oder Aufsetzen des zweiten Bauteils und dadurch, dass ein Nietbund, der an einer Stirnseite der Spannmutter vorgesehen ist, durch eine Fügeöffnung des ersten Bauteils hindurch in die Gewindehülse eingeführt und dort durch in einen verformten, einen Hinterschnitt der Gewindehülse hintergreifenden Nietbund verformt, sodass die Spannmutter und die Gewindehülse am ersten Bauteil fixiert sind, auch gegen ein Verdrehen. Hierdurch sind zusätzliche Mittel zum Fixieren der Gewindehülse oder des diese Gewindehülse aufweisenden Abstandhalters ebenso wenig erforderlich wie das Aufsetzen der Spannmutter auf den Spannbolzen und das Sichern der Spannmutter mit einem Werkzeug gegen Verdrehen beim Verspannen der Bauteile.

Bei einer weiteren Ausführungsform des erfindungsgemäßen Verfahrens wird ein Funktionselement vorzugsweise in Form eines Verbindungselementes an einer Fügeöffnung eines Bauteils durch bleibende Verformung eines Nietbundes in einen verformten Nietbund unter Verwendung eines zusätzlichen Halterings fixiert, und zwar dadurch, dass der das Bauteil im Bereich der Fügeöffnung durchgreifende Nietbund auch in eine Ringöffnung des Halterings eingeführt und dort in den einen Hinterschnitt des Halterings hintergreifenden Nietbund verformt wird. Der Haltering reicht mit einem Bund oder Abschnitt in die Fügeöffnung hinein. Die

Fügeöffnung weist einen Querschnitt auf, der größer ist als der Außenquerschnitt des Bundes oder Abschnitts, sodass die von dem Funktionselement und dem Haltering gebildete und am Bauteil fixierte Anordnung für einen seitlichen oder radialen Toleranzausgleich in der Fügeöffnung radial zu deren Achse bewegbar ist. Um eine Verdrehungssicherung des Funktionselementes in der Fügeöffnung zu erreichen, ist Letztere mit einem von der Kreisform abweichenden Querschnitt ausgebildet. Ebenso weist der in die Fügeöffnung hineinreichende Abschnitt eine von der Kreisform abweichende Umfangskontur auf. Ein die Fügeöffnung umgebender Bereich des Bauelementes ist zwischen dem Funktionselement und dem Haltering aufgenommen.

Der Ausdruck "im Wesentlichen" bzw. "etwa" bzw. "ca." bedeutet im Sinne der Erfindung Abweichungen vom jeweils exakten Wert um +/-10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

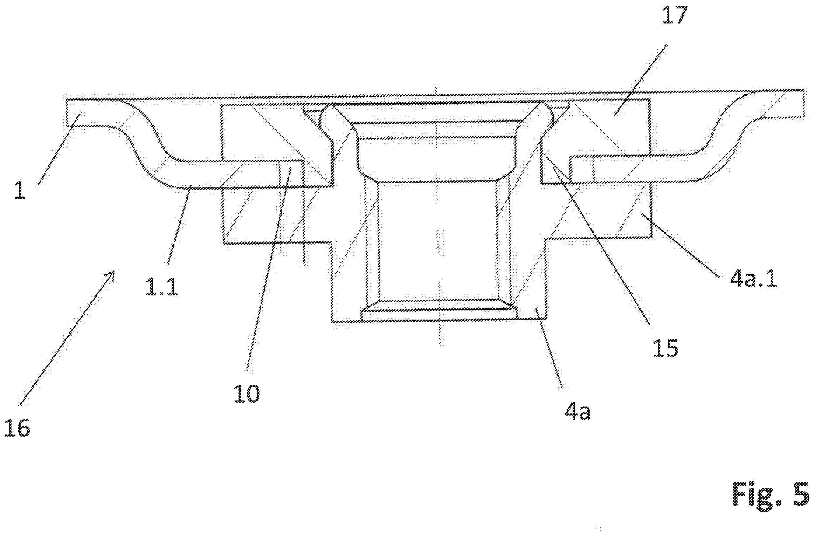

Die Erfindung wird im Folgenden anhand der Figuren an Ausführungsbeispielen näher erläutert, wobei Figur 5 keinen erfindungsgemäßen Gegenstand zeigt. Es zeigen:

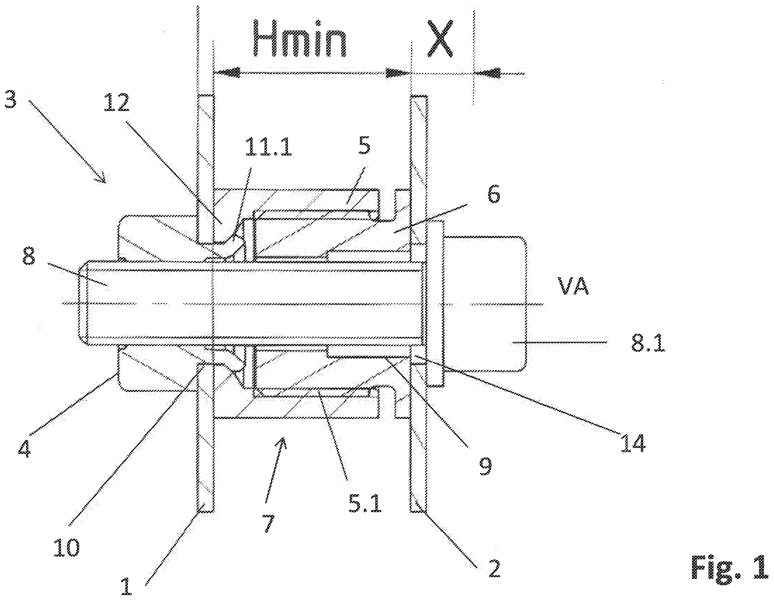

- Fig. 1: und 2 jeweils in vereinfachter Schnittdarstellung und in unterschiedlichem Zustand eine Vorrichtung zum gegenseitigen Verspannen von zwei Bauteilen mit unterschiedlichem Abstand bzw. mit Toleranzausgleich gemäß der Erfindung;

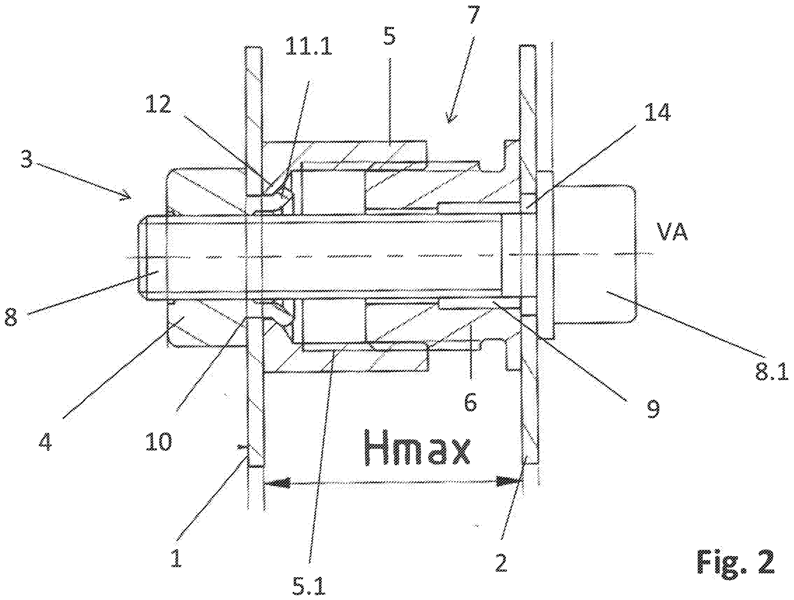

- Fig. 3: in schematischer Darstellung verschiedene Verfahrensschritte zur Befestigung einer Spannmutter sowie einer Gewindehülse der Vorrichtung der Figuren 1 und 2 an einem der Bauteile;
- Fig. 4: in vereinfachter Schnittdarstellung die Spannmutter sowie die Gewindehülse bei einer erfindungsgemäßen Vorrichtung mit seitlichen bzw. radialen Toleranzausgleich;
- Fig. 5: in vereinfachter Darstellung und im Schnitt eine Spannmutter für einen seitlichen bzw. radialen Toleranzausgleich.

In den Figuren sind 1 und 2 zwei Bauteile, die bei der dargestellten Ausführungsform aus einem metallischen Flachmaterial, beispielsweise aus Stahlblech hergestellt und z.B. Teile einer Fahrzeugkarosserie sind. Die Bauteile 1 und 2 sind über wenigstens eine Vorrichtung 3 miteinander verspannt sind, und zwar derart, dass sie einen vorgegebenen Abstand H voneinander aufweisen. Näher im Detail ist die Vorrichtung 3 so ausgebildet, dass die Bauteile 1 und 2 mit einem gegenseitigen Abstand H verspannt werden können, der je nach Erfordernis im Bereich zwischen einem minimalen Abstand Hmin und einem maximalen Abstand Hmax liegt, der Abstand H also um den Betrag X eingestellt werden kann, insbesondere auch für einen axialen Toleranzausgleich, d.h. für einen Toleranzausgleich in Richtung der Achse VA der Vorrichtung 3.

Im Detail umfasst die Vorrichtung 3 eine Spannmutter 4, eine mit einem Innengewinde versehene Gewindebuchse oder Gewindehülse 5 mit Innengewinde 5.1, eine Trommelmutter 6, die mit ihrem Außengewinde in das Innengewinde 5.1 der Gewindehülse 5 eingreift und zusammen mit der Gewindehülse einen axial einstellbaren Abstandhalter 7 bildet, sowie einen Spann- oder Gewindebolzen 8 mit Kopf 8.1, der (Gewindebolzen) in das Innengewinde der Spannmutter 4 eingreift. Die Spannmutter 4, die Gewindehülse 5, die Trommelmutter 6 und der Gewindebolzen 8 sind bei montierter Vorrichtung 3 achsgleich mit einander und mit der Achse VA angeordnet. Zwischen dem durch die Öffnung der Trommelmutter 6 hindurchreichenden Spannbolzen 8 ist eine beispielsweise aus Kunststoff gefertigte Mitnehmerhülse 9 vorgesehen, die in der nachstehend noch näher beschriebenen Weise beim Drehen des Gewindebolzens 8 um die Achse VA zunächst ein Mitdrehen der Trommelmutter 6 bewirkt, bevor über den Gewindebolzen das Verspannen der Bauteile 1 und 2 erfolgt. Das Außengewinde des Gewindebolzens 8 sowie das Innengewinde der Spannmutter 4, einerseits und das Innengewinde 5.1 der Gewindehülse 5 und das mit diesem Innengewinde zusammenwirkende Außengewinde der Trommelmutter 6, andererseits sind gegenläufige Gewinde, d.h. das Außengewinde des Gewindebolzens 8 sowie das Innengewinde der Spannmutter 4 sind beispielsweise Rechtsgewinde, während das Innengewinde 5.1 der Gewindehülse 5 und das mit diesem Innengewinde zusammenwirkende Außengewinde der Trommelmutter 6 Linksgewinde sind.

Die Spannmutter 3 und die Gewindehülse 5 sind an dem Bauteil 1 in einer dortigen Fügeöffnung 10 dadurch befestigt, dass ein an der Spannmutter 5 vorgesehener, hülsenartiger und die Fügeöffnung 10 durchgreifender Nietbund 11 durch verbleibende Verformung, d.h. als radial verformter Nietbund 11.1 gegen einen im Inneren der Gewindehülse 5 gebildete Hinterschnitt 12 umgelegt ist. Zur Bildung des Hinterschnitts 12 ist die Öffnung der Gewindehülse 5 so ausgeführt, dass sie sich zu der gegen das Bauteil 1 anliegenden Stirnseite der Gewindehülse 5 im Querschnitt verengt, und zwar außerhalb des Innengewindes 5.1.

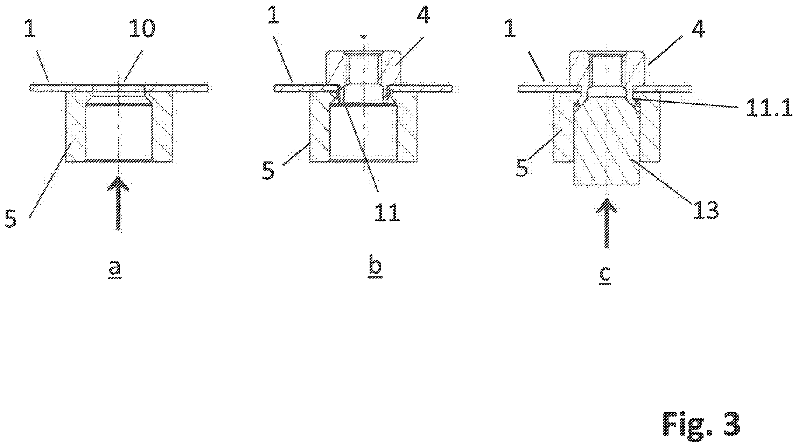

Die Figur 3 zeigt wesentliche Verfahrensschritte zum Verbinden des Bauteils 1 mit der Spannmutter 4 und der Gewindehülse 5, d.h. es wird zunächst die Gewindehülse 5 so am Bauteil 1 im Bereich der Fügeöffnung 10 positioniert, dass die Öffnung der Gewindehülse 5 deckungsgleich oder im Wesentlichen deckungsgleich mit der Fügeöffnung 10 angeordnet ist (Position a). Anschließend wird von der Gewindehülse 5 abgewandten Seite her die Spannmutter 4 mit ihrem Nietbund 11 in die Fügeöffnung und durch diese auch in die Gewindehülse 5 eingesetzt (Position b). Mit einem geeigneten stempelartigen und in die Gewindehülse 5 eingeführten Werkzeug 13 wird dann der unverformte Nietbund 11 in den verformten Nietbund 11.1, der den Hinterschnitt 12 hintergreift, wodurch die Spannmutter 4 und die Gewindehülse 5 am Bauteil 1 unverlierbar fixiert sind. Im Anschluss daran wird beispielsweise die Trommelmutter 6 in die Gewindehülse 5 eingedreht, und zwar vollständig oder im Wesentlichen vollständig, d.h. z.B. so weit, bis das eine Ende der Trommelmutter 6 gegen den Hinterschnitt 12 oder den umgelegten Nietbund 11.1 zur Anlage kommt. Die Trommelmutter 6 ist dabei bereits mit der Hülse 9 vormontiert. Im Anschluss daran wird das Bauteil 2 aufgesetzt, sodass es gegen die aus der Gewindehülse 5 vorstehende Stirnseite der Trommelhülse 6 anliegt, und der Gewindebolzen 8 wird dann von der der Spannmutter 4 abgewandten Seite durch eine Öffnung 14 des Bauteils 2 zumindest in die Trommelmutter 6 eingeführt und im Sinne eines Eindrehens in die Spannmutter 4 gedreht. Hierbei erfolgt zunächst über die Mitnehmerhülse 9 ein Mitdrehen der Trommelmutter 6 in der Weise, dass diese aufgrund der Linksgewinde der Trommelmutter 6 und der Gewindehülse 5 zunehmend aus der Gewindehülse 5 herausbewegt wird und hierdurch auch der Abstand H zwischen den Bauteilen 1 und 2 solange vergrößert wird, bis der geforderte endgültige Abstand H erreicht ist und eine weitere Abstandsänderung zwischen den Bauteilen 1 und 2 nicht mehr möglich ist, beispielsweise durch nicht dargestellte, den endgültigen Abstand fixierende Elemente oder Bauteile. Das weitere Drehen des Gewindebolzens 8 bewirkt dann ein zunehmendes Eindrehen des Gewindebolzens 8 in die Spannmutter 4 und schließlich ein festes Verspannen der Bauteile 1 und 2 dadurch, dass die sich gegen das Bauteil 1 abstützende Gewindehülse 5 und die sich gegen das Bauteil 1 abstützende Trommelmutter 6 einen starren Abstandhalter zwischen dem Bauteilen 1 und 2 bilden und beide Bauteile 1 und 2 an ihren einander abgewandten Seiten durch den Spannbolzen 8 bzw. dessen Kopfstück 8 und die Spannmutter 4 fest miteinander verspannt sind.

Die besondere Vorteile der Vorrichtung 3 bestehen darin, dass die Spannmutter 4 und die Gewindehülse 5 mit der Trommelmutter 6 am Bauteil 1 vormontiert werden können und die Einstellung des erforderlichen Abstandes H zwischen den Bauteilen 1 und 2 sowie das Verspannen dieser Bauteile 1 und 2 allein durch Einsetzen und Drehen des Spannbolzens 8 vom Bauteil 2 her erfolgen. Insbesondere ist es daher auch möglich, die Spannmutter 4 an einer später bei dem Verspannen der beiden Bauteile 1 und 2 nicht mehr oder nur schwer zugänglichen Position vorzusehen. Die das Verspannen der Bauteile 1 und 2 bewirkenden Kräfte wirken also ausschließlich über den mit seinem Kopfstück am Bauteil 2 anliegenden Spannbolzen 8 und über die am Bauteil 1 anliegende Spannmutter 4 sowie über den einstellbaren starren Abstandhalter, der von der Gewindehülse 5 und der Trommelmutter 6 gebildet ist.

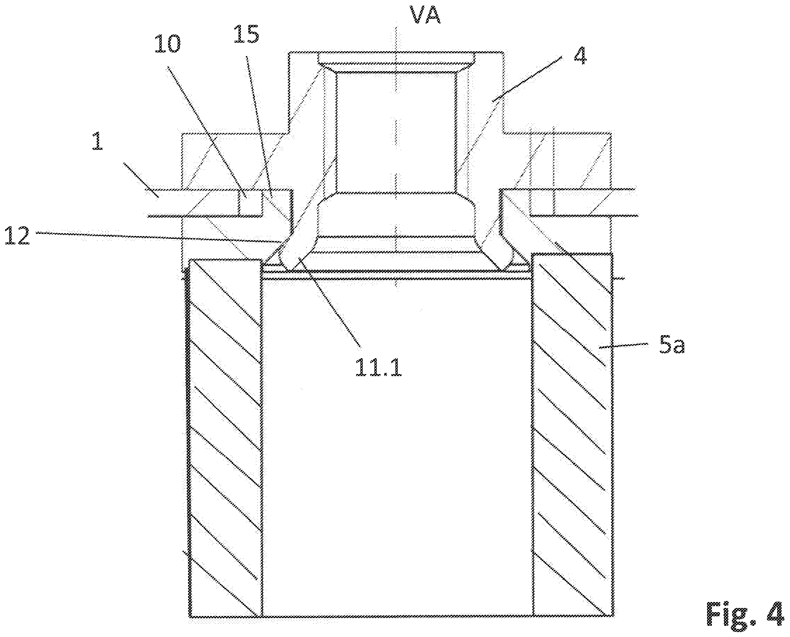

Vorstehend wurde davon ausgegangen, dass mit der Befestigungsvorrichtung 3 eine axiale Einstellung des Abstandes H sowie ein axialer Toleranzausgleich möglich ist. Die Figur 4 zeigt in vereinfachter Darstellung die von einer Spannmutter 4a und der Gewindehülse 5 gebildete Anordnung, die zugleich auch einen radialen Toleranzausgleich, d.h. einen Toleranzausgleich radial zur Achse AV ermöglicht. Hierfür reicht die Gewindehülse 5a mit einem Bund oder Abschnitt 15 in die Fügeöffnung 10 hinein. Der Abschnitt 15 besitzt eine von der Kreisform abweichende Umfangskontur, beispielsweise eine quadratische Umfangskontur. Analog hierzu ist auch die Fügeöffnung 10 mit einem von der Kreisform abweichenden Querschnitt, beispielsweise mit einem quadratischen Querschnitt ausgebildet, dessen Querschnittsseiten aber etwas größer sind als die Querschnittsseiten der Umfangsfläche des Abschnittes 15, sodass eine Verlagerung der Gewindehülse 5 mit der Spannmutter 4 in der Ebene senkrecht zur Achse VA und damit der radiale Toleranzausgleich möglich sind. Durch den von der Kreisform abweichenden Querschnitt der Fügeöffnung 10 und die ebenfalls von der Kreisform abweichende Umfangskontur des Abschnittes 15 ist gewährleistet, dass sich die Spannmutter 4 beim Verspannen der Bauteile 1 und 2 mit dem Gewindebolzen 8 nicht mitdrehen kann. Bevorzugt ist die Höhe, die der Bund oder Abschnitt 15 in Richtung der Achse VA aufweist etwas größer als die Dicke des das Bauteil 1 bildenden Blechs, so dass am Bauteil 1 befestigter Spannmutter 4 und Gewindehülse 5a (wiederum durch den verformten Nietbund 11.1) ein Verschieben der Spannmutter 4 der Gewindehülse 5a für den seitlichen oder radialen Toleranzausgleich möglich ist. Die die Bauteile 1 und 2 miteinander verspannende Kräfte wirken wiederum ausschließlich über den Gewindebolzen 8, die Spannmutter 4 und den von der Gewindehülse 5a und der Trommelmutter 6 gebildeten starren Abstandhalter.

Die Figur 5 zeigt eine Mutteranordnung 16, die einen seitlichen oder radialen Toleranzausgleich ermöglicht und aus einer Spannmutter 4a und einem Haltering 17 besteht, der im Bereich der Fügeöffnung 10 in gleicher Weise durch den verformten Nietbund 11.1 der Spannmutter gehalten ist, wie dies vorstehend für die Gewindehülse 5 bzw. 5a beschrieben wurde. Der Haltering 17 weist ebenfalls den vom verformten Nietbund 11.1 hintergriffenen Hinterschnitt 12 und den Bund oder Abschnitt 15 auf, der in die Fügeöffnung 10 hineinreicht und die von der Kreisform abweichende Umfangskontur aufweist. Ebenso ist die Fügeöffnung 10 mit dem von der Kreisform abweichenden Querschnitt ausgeführt, der wiederum größer ist als der Außenquerschnitt des Abschnitts 15, sodass ein Toleranzausgleich radial zu der Achse VA möglich ist. Wie die Figur 5 auch zeigt, ist das Bauteil 1 im Bereich der Spannmutteranordnung 16 mit einem domartigen Abschnitt 1.1 ausgebildet, und zwar derart, dass der Haltering 17 vollständig in der konkaven Seite des domartigen Abschnitts 1.1 aufgenommen ist und nicht über diejenige Ebene vorsteht, in der die der Spannmutter 4 abgewandte Unterseite des Bauteils 1 außerhalb des domartigen Abschnittes 1.1 angeordnet ist. Weiterhin ist das Bauteil 1 in einem die Fügeöffnung 10 umgebenden Bereich des domartigen Abschnitts 1.1 zwischen der Spannmutter 4a oder einem flanschartigen Abschnitt 4a.1 dieser Mutter und dem Haltering aufgenommen.

Die Erfindung wurde voranstehend an Ausführungsbeispielen beschrieben. Es versteht sich, dass zahlreiche Änderungen sowie Abwandlungen möglich sind, ohne dass dadurch der die Erfindung definierende Wortlaut der Ansprüche verlassen wird. So kann in gleicher Weise wie die Spannmutter 4a auch ein anderes mit dem Nietbund 11 versehenes Funktions- oder Verbindungselement am Bauteil 1 mit einem radialen Toleranzausgleich befestigt werden.

### Bezugszeichenliste

- 1, 2: Bauteil
- 1.1: domartiger Abschnitt
- 3: Befestigungsvorrichtung
- 4, 4a: Spannmutter
- 5, 5a: Gewindehülse
- 5.1: Innengewinde
- 6: Trommelmutter
- 7: Abstand halter
- 8: Gewinde- oder Spannbolzen
- 8.1: Bolzenkopf
- 9: Mitnehmerhülse
- 10: Fügeöffnung
- 11: Nietbund
- 12: Hinterschnitt
- 13: Werkzeug
- 14: Öffnung
- 15: Abschnitt oder Bund
- 16: Spannmutteranordnung
- 17: Haltering
- VA: Achse der Vorrichtung 3

## Patentansprüche

1. Verfahren zum Herstellen einer Baugruppe bestehend aus wenigstens zwei Bauteilen (1, 2), die beispielsweise aus einem Flachmaterial, z.B. aus Stahlblech hergestellt und die unter Verwendung einer Spannmutter (4), die gegen ein erstes Bauteil (1) an seiner einem zweiten Bauteil (2) abgewandten Außenfläche anliegt, sowie unter Verwendung eines in die Spannmutter (4) eingreifenden Spannbolzens (8), der gegen das zweite Bauteil (2) an seiner dem ersten Bauteil (1) abgewandten Außenfläche anliegt, sowie unter Verwendung eines von einer Gewindehülse (5, 5a) und einer Trommelmutter (6) gebildeten einstellbaren Abstandhalters (7) zwischen den Bauteilen (1, 2) in einem vorgegebenen Abstand (H) mit einander verspannt werden, wobei vor dem Eindrehen oder beim Eindrehen des die Trommelmutter (6) und die Gewindehülse (5) durchgreifenden Gewindebolzens (8) in die Spannmutter (4) zunächst unter Mitdrehen der Trommelmutter (6) der Abstand (H) zwischen den Bauteilen (1, 2) eingestellt und dann beim weiteren Eindrehen des Spannbolzens in die Spannmutter (4) die beiden Bauteile gegeneinander verspannt werden, wobei die Spannmutter (4) und die Gewindehülse (5) durch separate Bauteile gebildet sind,
**dadurch gekennzeichnet,**
**dass** die Spannmutter (4) und die Gewindehülse (5) an dem ersten Bauteil (1) fixiert werden, indem ein an einer Stirnseite der Spannmutter (4) vorgesehener Nietbund durch eine Fügeöffnung (10) des ersten Bauteils (1) hindurch in die Gewindehülse (5) eingeführt und dort in einen einen Hinterschnitt (12) der Gewindehülse (5, 5a) hintergreifenden Nietbund (11.1) bleibend verformt wird.

2. Verfahren nach Anspruch 1, **dadurch gekennzeichnet, dass** nach dem Fixieren der Spannmutter (4) und der Gewindehülse (5, 5a) die Trommelmutter (6) in die Gewindehülse (5) eingesetzt wird.

3. Verfahren nach Anspruch 1 oder 2, **dadurch gekennzeichnet, dass** bei Ausbildung des Innengewindes (5.1) der Gewindehülse (5, 5a) und des mit diesem Innengewinde zusammenwirkenden Außengewindes der Trommelmutter (6) gegenläufig zu dem Außengewinde des Spannbolzens (8) und des Innengewindes der Spannmutter (4) durch Drehen des Spannbolzens (8) im Sinne eines Eindrehens in die Spannmutter (4) zunächst eine Vergrößerung des Abstandes (H) zwischen den Bauteilen (1, 2) bis auf den erforderlichen Abstand (H) erfolgt und nach Erreichen dieses Abstandes (H) das Verspannen der sich an dem Abstandhalter (7) abstützenden Bauteile über den in die Spannmutter (4) eingreifenden Spannbolzen (8) erfolgt.

4. Verfahren nach einem der vorhergehenden Ansprüche, **dadurch gekennzeichnet, dass** zusätzlich zu einer axialen Einstellung des Abstandes (H) zwischen den Bauteilen (1, 2) oder zusätzlich zu einem axialen Toleranzausgleich auch ein seitlicher oder radialer Toleranzausgleich durch Bewegen der Spannmutter (4) und der mit dem verformten Nietbund (11.1) gehaltenen Gewindehülse (5) in einer vergrößerten Fügeöffnung (10) erfolgt, und zwar bei einem von der Kreisform abweichenden Querschnitt der Fügeöffnung (10) und einer von der Kreisform abweichenden Umfangskontur des die Fügeöffnung durchgreifenden Nietbundes (11) oder eines in die Fügeöffnung hineinreichenden Bundes oder Abschnitts (15) der Gewindehülse (5a).

5. Baugruppe bestehend aus wenigstens zwei jeweils aus Flachmaterial, beispielsweise aus Stahlblech hergestellten, voneinander beabstandeten und mit wenigstens einer Befestigungsvorrichtung (3) gegeneinander verspannten Bauteilen (1, 2), wobei die Befestigungsvorrichtung (3) eine Spannmutter (4), die gegen ein erstes Bauteil (1) an seiner dem zweiten Bauteil abgewandten Außenfläche anliegt, einen Spannbolzen (8), der gegen das zweite Bauteil (2) an seiner dem ersten Bauteil (1) abgewandte Außenseite anliegt, sowie einen einstellbaren Abstandhalter (7) aufweist, gegen den sich die Bauteile (1, 2) mit ihren einander zugewandten Seiten abstützen und der aus einer an der Innenseite des ersten Bauteils (1) anliegenden Gewindehülse (5) mit Innengewinde (5.1) sowie aus einer mit einem Außengewinde in das Innengewinde (5.1) eingreifenden Trommelmutter (6) besteht, gegen die die Innenseite des zweiten Bauteils (2) anliegt, wobei der Spannbolzen (8) Öffnungen (10, 14) in den Bauteilen (1, 2) sowie auch den Abstandhalter (7) durchgreift, wobei die Spannmutter (4) und die Gewindehülse (5) durch separate Bauteile gebildet sind,
**dadurch gekennzeichnet,**
**dass** die Spannmutter (4) mit einem hülsenartigen, über ihre den ersten Bauteil (1) zugewandte Stirnseite wegstehenden Nietbund (11) ausgebildet ist, der die Öffnung (10) im ersten Bauteil durchgreift und in die Gewindehülse (5) hineinreicht und dort durch bleibende Verformung in einen einen Hinterschnitt (12) in der Gewindehülse (5) hintergreifenden verformten Nietbund (11.1) verformt ist.

6. Baugruppe nach Anspruch 5, **dadurch gekennzeichnet, dass** zwischen den Spannbolzen (8) und der Trommelmutter (6) eine Mitnehmerhülse (9) vorgesehen ist.

7. Baugruppe nach Anspruch 5 oder 6, **dadurch gekennzeichnet, dass** das Innengewinde (5.1) der Gewindehülse (5) und das Außengewinde der Trommelmutter (6) gegenläufig zu dem Gewinde des Spannbolzens (8) und der Spannmutter (4) ausgebildet sind,
wobei vorzugsweise das Innengewinde (5.1) der Gewindehülse (5) und das Außengewinde der Trommelmutter (6) Linksgewinde und das Gewinde der Spannmutter (4) und des Spannbolzens (8) Rechtsgewinde sind.

8. Baugruppe nach einem der vorhergehenden Ansprüche 5 bis 7, **dadurch gekennzeichnet, dass** für einen radialen Toleranzausgleich die Öffnung (10, 14) im ersten Bauteil (10) und/oder im zweiten Bauteil (2) größer ist als der Außenquerschnitt des die Öffnung (10) ersten Bauteil durchgreifenden Nietbundes (11) oder eines in die Öffnung (10) des ersten Bauteils (1) hineinreichenden Abschnitts (15) der Gewindehülse (5a) und/oder als der Außenquerschnitt des Spannbolzens (8).

9. Vormontierte Anordnung zur Verwendung für eine Baugruppe gemäß einem der Ansprüche 5 bis 8, bei der eine Spannmutter (4) und eine Gewindehülse (5) an einem eine Fügeöffnung (10) aufweisenden Bauteil (1) unverlierbar und gegen ein Verdrehen fixiert sind, wobei die Gewindehülse (5) mit einer Stirnseite gegen das Bauteil (1) anliegt und wobei eine Öffnung der Gewindehülse (5) deckungsgleich mit der Fügeöffnung (10) angeordnet ist, **dadurch gekennzeichnet, dass** die Spannmutter (4) an einer der Gewindehülse (5) abgewandten, gegenüberliegenden Seite des Bauteils (1) gegen das Bauteil anliegt, wobei ein an einer Stirnseite der Spannmutter (4) vorgesehener Nietbund (11) durch die Fügeöffnung (10) des Bauteils (1) hindurch geführt ist und in die Gewindehülse (5) hineinreicht und wobei der Nietbund (11) durch bleibende Verformung in einen radial verformten Nietbund (11.1) verformt ist und einen im Inneren der Gewindehülse (5, 5a) ausgebildeten Hinterschnitt (12) hintergreift.

## Claims

1. Method of producing an assembly consisting of at least two components (1, 2), made of a flat material, for example of sheet steel, which are clamped to each other at a predetermined distance (H) by using a clamping nut (4), which abuts a first component (1) on its outer side facing away from a second component (2), as well as by using a clamping bolt (8) which engages in the clamping nut (4) and abuts the second component (2) on its outer surface facing away from the first component (1), as well as by using an adjustable spacer (7) between the two components (1, 2) formed by a threaded sleeve (5, 5a) and a drum nut (6), wherein before screwing in or while screwing in the threaded bolt (8), which passes through the drum nut (6) and the threaded sleeve (5), into the clamping nut (4), while initially also turning the drum nut (6), the distance (H) between the components (1, 2) is adjusted and then during further screwing in of the clamping bolt into the clamping nut (4) the two components are clamped to each other, wherein the clamping nut (4) and the threaded sleeve (5) are formed by separate components,
**characterised in that**
the clamping nut (4) and the threaded sleeve (5) are fixed on the first component, **in that** a rivet collar provided on a front side of the clamping nut (4) is inserted through a joint opening (10) of the first component (1) into the threaded sleeve (5) and is then permanently deformed into a rivet collar (11.1) engaging behind an undercut (12) of the threaded sleeve (5, 5a).

2. Method according to claim 1, **characterised in that** after the clamping nut (4) and the threaded sleeve (5, 5a) have been fixed, the drum nut (6) is inserted into the threaded sleeve (5).

3. Method according to claim 1 or 2, **characterised in that** when producing the internal thread (5.1) of the threaded sleeve (5, 5a) and the external thread of the drum nut (6) interacting with this internal thread, contrary to the external thread of the clamping bolt (8) and the internal thread of the clamping nut (4), by turning the clamping bolt (8) in the sense of screwing into the clamping nut (4), initially an increase in the distance (H) between the components (1, 2) up to the required distance (H) takes place and after reaching this distance (H) clamping of the components supported on the spacer (7) takes place via the clamping bolt (8) engaging in the clamping nut (4).

4. Method according to any one of the preceding claims, **characterised in that** in addition to an axial adjustment of the distance (H) between the components (1, 2) or in addition to axial tolerance compensation, lateral or radial tolerance compensation also takes place through moving the clamping nut (4) and the threaded sleeve (5) held with the deformed rivet collar (11.1) in an enlarged joint opening (10), namely with a cross-section of the joint opening (10) differing from the circular, and a circumferential contour of the rivet collar (11) that passes through the joint opening or of a collar or section (15) of the threaded sleeve (5a) extending into the joint opening, differing from the circular.

5. Assembly consisting of at least two components (1, 2) each made of flat material, for example sheet steel, which are at a distance from one another and clamped to each other with at least a fastening device (3), wherein the fastening device (3) comprises a clamping nut (4) which abuts a first component (1) on its outer surface facing away from the second component, a clamping bolt (8) which abuts the second component (2) on its outer surface facing away from the first component (1), as well as an adjustable spacer (7) against which the components (1, 2) are supported with the sides facing each other and which consists of a threaded sleeve (5) with an internal thread (5.1) bearing against the inner side of the first component (1) as well as a drum nut (6), engaging with an external thread into the internal thread (5.1), against which the inner side of the second component (2) abuts, wherein the clamping bolt (8) passes through openings (10, 14) in the components (1, 2) as well as through the spacer (7), wherein the clamping nut (4) and the threaded sleeve (5) are formed by separate components,
**characterised in that**
the clamping nut (4) is provided with a sleeve-like rivet collar (11) which projects from its front side facing the first component (1), and which passes through the opening (10) in the first component and extends into the threaded sleeve (5) and is deformed there, through permanent deformation into a deformed rivet collar (11.1) engaging behind an undercut (12) in the threaded sleeve (5).

6. Assembly according to claim 5, **characterised in that** between the clamping bolt (8) and the drum nut (6) a driving sleeve (9) is provided.

7. Assembly according to claim 5 or 6, **characterised in that** the internal thread (5.1) of the threaded sleeve (5) and the external thread of the drum nut (6) are designed contrary to the thread of the clamping bolt (8) and the clamping nut (4),
wherein preferably the internal thread (5.1) of the threaded sleeve (5) and the external thread of the drum nut (6) are left-handed threads and the thread of the clamping nut (4) and of the clamping bolt (8) are right-handed threads.

8. Assembly according to any one of the preceding claims 5 to 7, **characterised in that** for radial tolerance compensation the opening (10, 14) in the first component (1) and/or in the second component (2) is larger than the outer cross-section of the rivet collar (11) that passes through the opening (10) of the first component or of a section (15) of the threaded sleeve (5a) extending into the opening (10) of the first component (1) and/or than the outer cross-section of the clamping bolt (8).

9. Preassembled arrangement for use in an assembly according to any one of claims 5 to 8, in which a clamping nut (4) and a threaded sleeve (5) are fixed in an captive manner and secured against twisting on a component (1) having a joint opening (10), wherein the threaded sleeve (5) abuts the component (1) with one front side and wherein an opening of the threaded sleeve (5) is arranged congruently with the joint opening (10), **characterised in that** the clamping nut (4) abuts the component on an opposite side of the component (1) facing away from the threaded sleeve (5), wherein a rivet collar (11) provided on a front side of the clamping nut (4) is passed through the joint opening (10) of the component (1) and extends into the threaded sleeve (5), and wherein through permanent deformation the rivet collar (11) is deformed into a radially deformed rivet collar (11.1) and engages behind an undercut (12) formed in the interior of the threaded sleeve (5, 5a).

## Revendications

1. Procédé, destiné à fabriquer un module constitué d'au moins deux éléments structurels (1, 2), qui sont fabriqués par exemple en une matière plate, par ex. en tôle d'acier, que l'on contraint l'un contre l'autre avec un écart (H) prédéfini, en utilisant un écrou de serrage (4), qui s'appuie contre un premier élément structurel (1) à sa surface extérieure opposée à un deuxième élément structurel (2), ainsi qu'en utilisant un boulon de serrage (8) s'engageant dans l'écrou de serrage (4), qui s'appuie contre le deuxième élément structurel (2) à sa surface extérieure opposée au premier élément structurel, ainsi qu'en utilisant un espaceur (7) réglable, formé d'une douille taraudée (5, 5a) et d'un écrou tambour (6) entre les éléments structurels (1, 2), avant le vissage ou pendant le vissage du boulon fileté (8) qui traverse l'écrou tambour (6) et la douille taraudée (5) dans l'écrou de serrage (4), dans un premier temps, en faisant tourner conjointement l'écrou tambour (6), l'écart (H) entre les éléments structurels (1, 2) étant réglé, et ensuite lors de la poursuite du vissage du boulon de serrage dans l'écrou de serrage (4), les deux éléments structures étant contraints l'un contre l'autre, l'écrou de serrage (4) et la douille taraudée (5) étant formés d'éléments structurels séparés,
**caractérisé en ce que**
l'on fixe l'écrou de serrage (4) et la douille taraudée (5) sur le premier élément structurel (1) **en ce qu'**on introduit un collet de rivetage prévu sur une face frontale de l'écrou de serrage (4) à travers un orifice d'assemblage (10) du premier élément structurel (1) dans la douille taraudée (5) et **en ce qu'**on l'y déforme de manière durable en un collet de rivetage (11.1) s'engageant par l'arrière dans une contre-dépouille (12) de la douille taraudée (5, 5a).

2. Procédé selon la revendication 1, **caractérisé en ce qu'**après avoir fixé l'écrou de serrage (4) et la douille taraudée (5, 5a), on insère l'écrou tambour (6) dans la douille taraudée (5).

3. Procédé selon la revendication 1 ou 2, **caractérisé en ce que** lors de la création du taraudage (5.1) de la douille taraudée (5, 5a) et du filetage extérieur de l'écrou tambour (6) coopérant avec ledit taraudage à contresens du filetage extérieur du boulon de serrage (8) et du taraudage de l'écrou de serrage (4) par rotation du boulon de serrage (8) dans le sens d'un vissage dans l'écrou de serrage (4), on assiste d'abord à un agrandissement de l'écart (H) entre les éléments structurels (1, 2) jusqu'à atteinte de l'écart (H) requis, et après l'atteinte dudit écart (H), à la contrainte des éléments structurels qui s'appuient sur l'espaceur (7) par l'intermédiaire du boulon de serrage (8) qui s'engage dans l'écrou de serrage (4).

4. Procédé selon l'une quelconque des revendications précédentes, **caractérisé en ce qu'**additionnellement à un réglage axial de l'écart (H) entre les éléments structurels (1, 2) ou additionnellement à une compensation axiale des tolérances, on procède également à une compensation latérale ou radiale des tolérances par déplacement de l'écrou de serrage (4) et de la douille taraudée (5) maintenue par le collet de rivetage (11.1) déformé dans un orifice d'assemblage (10) agrandi, à savoir avec une section transversale différente de la forme circulaire de l'orifice d'assemblage (10) et un contour périphérique différent de la forme circulaire du collet de rivetage (11) qui traverse l'orifice d'assemblage ou d'un collet ou tronçon (15) de la douille taraudée (5a) arrivant jusque dans l'orifice d'assemblage.

5. Module, constitué d'au moins deux éléments structurels (1, 2) respectivement fabriqués en une matière plate, par exemple en tôle d'acier, écartés l'un de l'autre et contraints l'un contre l'autre à l'aide d'au moins un dispositif de fixation (3), le dispositif de fixation (3) comportant un écrou de serrage (4), qui s'appuie contre un premier élément structurel (1) à sa surface extérieure opposée au deuxième élément structurel, un boulon de serrage (8), qui s'appuie contre le deuxième élément structurel (2) à sa surface extérieure opposée au premier élément structurel (1), ainsi qu'un espaceur (7) réglable, contre lequel les éléments structurels (1, 2) s'appuient par leurs faces dirigées l'une vers l'autre et qui est constitué d'une douille taraudée (5) pourvue d'un taraudage (5.1), qui s'appuie sur la face intérieure du premier élément structurel (1), ainsi que d'un écrou tambour (6) qui s'engage par un filetage extérieur dans le taraudage (5.1), contre lequel s'appuie la face intérieure du deuxième élément structurel (2), le boulon de serrage (8) traversant des orifices (10, 14) dans les éléments structurels (1, 2) ainsi qu'également l'espaceur (7), l'écrou de serrage (4) et la douille taraudée (5) étant formés d'éléments structurels séparés,
**caractérisé en ce que**
l'écrou de serrage (4) est conçu avec un collet de rivetage (11) en forme de douille, saillant à partir de sa face frontale dirigée vers le premier élément structurel (1) qui traverse l'orifice (10) dans le premier élément structurel et qui arrive jusqu'à l'intérieur de la douille taraudée (5) et y est déformé par déformation durable en un collet de rivetage (11.1) s'engageant par l'arrière dans une contre-dépouille (12) dans la douille taraudée (5).

6. Module selon la revendication 5, **caractérisé en ce qu'**entre le boulon de serrage (8) et l'écrou tambour (6) est prévue une douille d'entraînement (9).

7. Module selon la revendication 5 ou 6, **caractérisé en ce que** le taraudage (5.1) de la douille taraudée (5) et le filetage extérieur de l'écrou tambour (6) sont conçus à contresens du filetage du boulon de serrage (8) et de l'écrou de serrage (4),
de préférence le taraudage (5.1) de la douille taraudée (5) et le filetage extérieur de l'écrou tambour (6) étant des filets à gauche et le filetage de l'écrou de serrage (4) et du boulon de serrage (8) étant des filets à droite.

8. Module selon l'une quelconque des revendications 5 à 7 précédentes, **caractérisé en ce que** pour une compensation des tolérances radiales, l'orifice (10, 14) dans le premier élément structurel (1) et/ou dans le deuxième élément structurel (2) est plus grand que la section transversale extérieure du collet de rivetage (11) traversant l'orifice (10) du premier élément structurel ou d'un tronçon (15) de la douille taraudée (5a) qui arrive jusque dans l'orifice (10) du premier élément structurel (1) et/ou que la section transversale extérieure du boulon de serrage (8).

9. Ensemble préassemblé, destiné à être utilisé pour un module selon l'une quelconque des revendications 5 à 8, sur lequel un écrou de serrage (4) et une douille taraudée (5) sont fixés de manière imperdable et bloquée en rotation sur un élément structurel (1) comportant un orifice d'assemblage (10), la douille taraudée (5) s'appuyant par une face frontale contre l'élément structurel (1) et un orifice de la douille taraudée (5) étant placé en recouvrement de l'orifice d'assemblage (10), **caractérisé en ce que** sur une face de l'élément structurel (1) opposée, placée en vis-à-vis de la douille taraudée (5), l'écrou de serrage (4) s'appuie contre l'élément structurel, un collet de rivetage (11) prévu sur la face frontale de l'écrou de serrage (4) étant guidé à travers l'orifice d'assemblage (10) de l'élément structurel (1) et arrivant jusque dans la douille taraudée (5) et le collet de rivetage (11) étant déformé par déformation durable en un collet de rivetage (11.1) à déformation radiale et s'engageant par l'arrière dans une contre-dépouille (12) conçue à l'intérieur de la douille taraudée (5, 5a).
